Europäisches Patentamt

(19) European Patent Office

Office européen des brevets

(11) Publication number: **0 083 135**
**B1**

(12) **EUROPEAN PATENT SPECIFICATION**

(45) Date of publication of patent specification: **01.04.87**

(51) Int. Cl.⁴: **F 16 L 37/08**

(21) Application number: **82201638.2**

(22) Date of filing: **20.12.82**

(54) A pipe coupling or branch pipe.

(30) Priority: **24.12.81 NL 8105852**

(43) Date of publication of application:
**06.07.83 Bulletin 83/27**

(45) Publication of the grant of the patent:
**01.04.87 Bulletin 87/14**

(84) Designated Contracting States:
**AT BE CH DE FR GB IT LI LU NL SE**

(56) References cited:
**DE-A-3 008 962**
**DE-B-1 032 985**
**NL-A-7 007 500**
**US-A-2 458 874**

(73) Proprietor: **WAVIN B.V.**
**Händellaan 251**
**NL-8031 EM Zwolle (NL)**

(72) Inventor: **Frederiksen, Per Duus**
**88 Virringvej, Virring**
**DK-8660 Skanderborg (DK)**
Inventor: **Offringa, Oege, René**
**19 Singelberg**
**NL-7772 DA Hardenberg (NL)**
Inventor: **Kiezebrink, Willem**
**9 Oelenveerstraat**
**NL-7771 BH Hardenberg (NL)**

(74) Representative: **van der Veken, Johannes**
**Adriaan et al**
**EXTERPATENT B.V. Willem Witsenplein 4**
**NL-2596 BK 's-Gravenhage (NL)**

Courier Press, Leamington Spa, England.

## Description

This invention relates to a pipe coupling or branch pipe comprising a socket including a chamber having a portion with a diameter increasing away from the socket opening, a radially expandable clamping ring in the chamber and having an outer circumferential wall portion with a likewise increasing diameter, a sealing ring around the pipe and a centering ring with an extension adapted to co-operate with the clamping ring and allow radial expansion of the clamping ring. Such a pipe coupling or branch pipe is known in the art and is e.g. used for interconnecting two pipes or for connecting a conduit to a branch of a main conduit. U.S. 2 458 874 describes, a coupling of this type.

In the said known coupling a clamping ring is used which is split in axial direction and of which the inner circumference is provided with sawteeth-shaped circumferential grooves to obtain a good grip on the periphery of a pipe to be inserted into the coupling. A split clamping ring designed to prevent a pipe from being withdrawn from the coupling, does not, however, provide a seal against the pressure of a fluid e.g. a liquid or gas.

A separate sealing ring of resilient material also accommodated in the pipe coupling or branch pipe prevents a leakage of fluid from a pipe through a pipe coupling between the periphery of a pipe and the inner circumference of the chamber. The said known sealing ring is so embodied that the fluid pressure in the conduit presses the same against the pipe. To prevent a desetting of the clamping ring the same provided with a thin-walled cylindrical sleeve projecting outside the coupling, as a result of which the said sleeve may easily be damaged. The said damage may be such that a pipe can no longer be inserted into the coupling.

It is an object of the present invention to provide a pipe coupling or branch pipe which can be used for plastic pipes or for pipes the outer side of which is coated with plastics and enabling a relatively good penetration depth of the teeth at the interior of the clamping ring into the material of the pipe in that, already at the time of inserting a pipe, the clamping ring may perform a radial displacement without any danger occuring of a desetting or damage of the clamping ring. To this end an entirely split clamping ring may be used, this contrary to a partially split clamping ring causing the end of the front surface of a pipe to press separate lips towards the inside.

This is achieved according to the invention with a pipe coupling or a branch pipe which is characterised in that the clamping ring at the end with the largest outer diameter is provided with a projection with an inner surface extending substantially parallel to the center line of the clamping ring or tapering inwardly towards the free end of the projection, and the extension of the centering ring has an outer surface extending substantially parallel to the center line of the centering ring or tapering inwardly towards a radial surface of the centering ring, the projection fitting with its inner surface on the outer surface of the extension and the radial distance of the inner surface of the projection of the clamping ring in unexpanded condition to its center line being smaller than the radial distance of the outer surface of the extension of the centering ring to its center line allowing the clamping ring to be placed with its inner surfaces on the outer surface of the extension of the centering ring with a certain pretention of the clamping ring.

The advantage of this feature is that at the insertion of a pipe, the clamping ring is capable of expanding in radial direction without becoming situated eccentrically in the chamber. In this manner a firm anchorage is ensured of the pipe in the pipe coupling as soon as a tensile force is exerted upon said pipe with respect to the coupling, without a fluid pressure already prevailing in the said pipe.

In a favourable embodiment of the pipe coupling or branch pipe according to the invention the extension of the centering ring comprises one or more projections protruding from the radial surface of the centering ring.

The extension is preferably a circumferential collar, the outer surface of which engages with the inner surface of the projection of the clamping ring.

The present invention will be illustrated with the aid of the accompanying drawing, wherein:

Fig. 1 is half an axial section of a side view of a pipe coupling or a branch pipe according to the invention, prior to the instalment of a pipe, and

Fig. 2 is a view similar to fig. 1, however, illustrating an installed pipe part.

The pipe coupling or branch pipe as illustrated in the drawing consists of two components, to wit the connection 1 proper, being designed in this embodiment to be mounted to the branch of a main conduit, and a socket 2 screwed to the connection 1 by means of a screw-thread 3. Connection 1 and socket 2 together form the body of the coupling. On tightening the socket 2 to the connection 1 by screw-thread 3, a centering ring 4 is clamped between the said connection 1 and socket 2. Said centering ring locks a sealing ring 5. Connection 1 may, by means of screw-thread 6, be installed in the branch of a pipe conduit for e.g. conveying gas or water, whereupon a sealing ring 7 provides a seal between the said connection 1 and the branch (not illustrated). Socket 2 secured to connection 1, comprises a longitudinally split clamping ring 8 or tensioning ring. The inner side of said clamping ring comprises barb-shaped grooves 9 and the outer side a tapering surface 10, adjoining a likewise tapering surface at the inner side of socket 2.

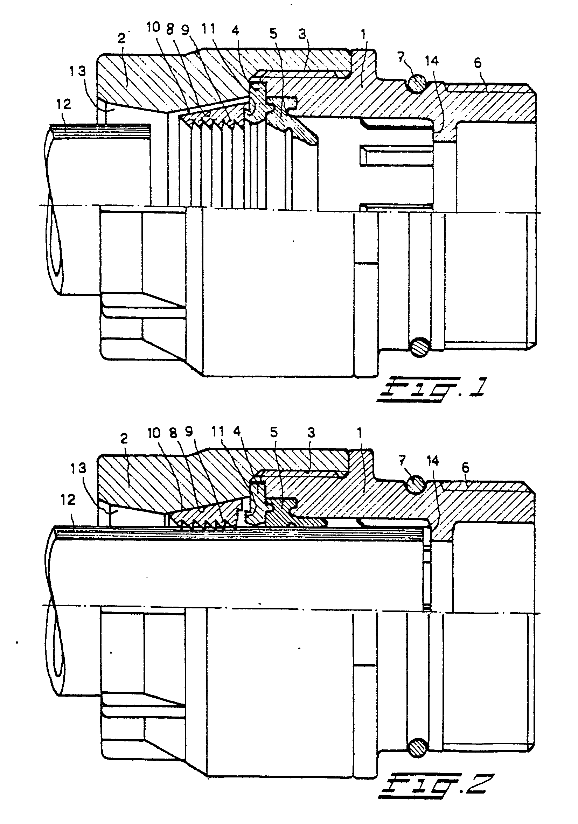

The pipe coupling or branch pipe according to the invention therefore comprises a socket 1, 2 provided at one end with an opening 13 for the insertion of a pipe 12, which opening merges within the socket into a chamber, the circumferential wall of which comprises a portion having a diameter increasing from the opening 13 on, a clamping ring 8 within the said chamber also being provided with a circumferential wall portion 10 additionally having an increasing diameter, as well as a sealing ring 5 fitting around the pipe. An extension 11 within the chamber allows in radial conjunction with the circumferential portion of the chamber through ring 4 and in conjunction with the clamping ring 8 on the other hand, for a radial expansion of the clamping ring when inserting a pipe. The centering ring 4 therefore radially abuts a wall portion of the chamber and at least partially radially abuts a part of the clamping ring 8 by the extension 11, as is clearly illustrated in fig. 1. The extension 11 together with the ring 4 interacting with a wall portion of the chamber, abuts a radial surface of the clamping ring 8. The ring 4 with its extension 11 comprises support means installed in front of the end of the clamping ring 8 with the greatest outer diameter, while the extension 11 or the support means may consist of one or more projections running axially to a radial surface of the ring 4. In the illustrated embodiment the extension 11 or support means is a circumferential collar comprising an outer mantle running axially to the radial surface of the ring 4 and fitting into an inner mantle of the chamber in one end surface of the clamping ring. The outer diameter of the circumferential collar provided by the extension 11 exceeds near its end surface, the outer diameter of the collar at the radial surface of the ring 4 as is clearly illustrated in fig. 2. The diameter of the chamber in the end surface of the clamping ring is smaller at said end surface than the diameter at the bottom of the chamber as is also clearly visible in fig. 2. The external diameter of the circumferential collar of the extension 11 of the ring 4 and the internal diameter of the chamber in the clamping ring are so adjusted with respect to one another that the clamping ring can be fitted onto the circumferential collar with a slight pretension. The clamping ring 8 and the centering ring 4 may be united prior to assembling the pipe coupling, so after the instalment of a sealing ring 5 in the connection 1 and prior to the socket 2 having been screwed to the said connection 1. Due to the slight pretension of the clamping ring 8 which is a longitudinally split ring, said clamping ring cannot get loose from the extension 11 even when the pipe coupling is subjected to impacts, for instance, when hitting hard ground. Thus a correct setting and centering of the clamping ring is assured, so that a pipe 12 can easily be inserted into the said coupling. The dimensions of the coupling and its respective components are thus that the clamping ring will slightly expand at the insertion of the pipe 12 and get detached from the extension 11 (see the installed pipe as illustrated in fig. 2). The pipe coupling according to the invention is so designed that the radial surface of the ring 4 provided with the circumferential collar is situated at such a distance from the circumferential wall of the chamber having a diameter increasing from the entrance opening 13 on, that when the clamping ring is situated on the circumferential collar of the extension 11, wall portion 10 of the clamping ring having a likewise increasing diameter, is coming to lie with radial play with respect to the corresponding circumferential wall of the chamber; said radial play is illustrated in fig. 1. Notwithstanding the said radial play no desetting of the clamping ring will occur so that an easy insertion of the pipe is assured at all times. The radial surface of the ring 4 provided with a circumferential collar of the extension 11 is situated at the side of the ring 4 not facing the sealing ring 5, said ring 4 being the centering ring for the sealing ring 5. In this manner a good setting of the clamping ring is assured with the aid of very simple means, whilst simultaneously a withdrawal of the pipe 12 is safeguarded. When being inserted, pipe 12 is entirely pressed against a breast 14 and when said pipe is slightly withdrawn, the conical wall portions contact each other so that a good clamping action is obtained.

The embodiment of the pipe coupling more particularly of the connection 1, is entirely in dependence of the purpose for which the latter is used. So, for instance, the part comprising screwthread 6 can be replaced by a part comprising screwthread 3 and by chambers for accommodating a sealing ring 5 with a centering ring 4 to which in that case a second socket is tightened so that the pipe coupling is suitable for interconnecting two pipes.

**Claims**

1. A pipe coupling or branch pipe comprising a socket including a chamber having a portion with a diameter increasing away from the socket opening (13), a radially expandable clamping ring (8) in the chamber and having an outer circumferential wall portion with a likewise increasing diameter, a sealing ring (5) around the pipe, and a centering ring (4) with an extension (11) adapted to co-operate with the clamping ring and allow radial expansion of the clamping ring, characterised in that the clamping ring (8) at the end with the largest outer diameter is provided with a projection with an inner surface extending substantially parallel to the center line of the clamping ring (8) or tapering inwardly towards the free end of the projection, and the extension (11) of the centering ring (4) has an outer surface extending substantially parallel to the center line of the centering ring (4) or tapering inwardly towards a radial surface of the centering ring (4), the projection fitting with its inner surface on the outer surface of the extension and the radial distance of the inner surface of the projection of the clamping ring (8) in unexpanded condition to its center line being smaller than the radial distance of the outer surface of the extension (11) of the centering ring (4) to its center line allowing the clamping ring (8) to be placed with its inner surface on the outer surface of the extension (11) of the centering ring (4) with a certain pretention of the clamping ring.

2. A pipe coupling or branch pipe as claimed in claim 1, characterised in that the extension (11) of the centering ring (4) comprises one or more projections protruding from the radial surface of the centering ring (4).

3. A pipe coupling or branch pipe as claimed in claim 1 and 2, characterised in that the extension (11) is a circumferential collar.

4. A pipe coupling or branch pipe as claimed in claims 1—3, characterised in that the outer diameter of the circumferential collar exceeds near its end surface the outer diameter of the collar at the radial surface of the ring (4).

5. A pipe coupling or branch pipe as claimed in claims 1—4, characterised in that the diameter of the inner surface of the projection on the clamping ring (8) at the free end of the projection is smaller than the diameter at the base of the projection.

6. A pipe coupling or branch pipe as claimed in claims 1—5, characterised in that the radial surface of the ring (4) provided with the circumferential collar is so situated that the wall portion (10) of the clamping ring (8) having an increasing diameter is, when the projection is fitted onto the circumferential collar, situated with radial play with respect to the corresponding circumferential wall of the chamber.

**Patentansprüche**

1. Rohrkupplung oder Abzweigleitung, bestehend aus einer Muffe mit einer Kammer mit einem Bereich sich von der Muffenöffnung (13) fortweisend vergrößernden Durchmessers, einem radial aufweitbaren Klemmring (8) in der Kammer mit einem äußeren Umfangswandbereich mit in gleicher Weise sich vergrößerndem Durchmesser, einem Dichtungsring (5) um dem Rohr und einem Zentrierring (4) mit einem Ansatz (11) für ein Zusammenwirken mit dem Klemmring und zur Ermöglichung einer radialen Aufweitung des Klemmringes, dadurch gekennzeichnet, daß der Klemmring (8) an dem Ende mit dem größten Außendurchmesser mit einem Vorsprung mit einer im wesentlichen parallel zur Mittellinie des Klemmringes (8) verlaufenden oder zum freien Ende des Vorsprungs nach innen zulaufenden Innenfläche versehen ist und der Ansatz (11) des Zentrierringes (4) eine im wesentlichen parallel zur Mittellinie des Zentrierringes (4) verlaufende oder zu einer Radialfläche des Zentrierringes (4) nach innen zulaufende Außenfläche aufweist, der Vorsprung mit seiner Innenfläche auf die Außenfläche des Ansatzes paßt und der radiale Abstand der Innenfläche des Vorsprungs des Klemmrings (8) im nicht aufgeweiteten Zustand zu seiner Mittellinie kleiner ist als der radiale Abstand der Außenfläche des Ansatzes (11) des Zentrierringes (4) von seiner Mittellinie, und der Klemmring (8) mit seiner Innenfläche auf die Außenfläche des Ansatzes (11) des Zentrierringes (4) mit einer gewissen Vorspannung des Klemmringes aufsetzbar ist.

2. Rohrkupplung oder Abzweigleitung nach Anspruch 1, dadurch gekennzeichnet, daß der Ansatz (11) des Zentrierringes (4) eine oder mehrere Vorsprünge umfaßt, die von der Radialfläche des Zentrierringes (4) vorstehen.

3. Rohrkupplung oder Abzweigleitung nach Anspruch 1 und 2, dadurch gekennzeichnet, daß der Ansatz (11) ein Umfangsbund ist.

4. Rohrkupplung oder Abzweigleitung nach den Ansprüchen 1 bis 3, dadurch gekennzeichnet, daß der Außendurchmesser des Umfangsbundes nahe seiner Endfläche den Außendurchmesser des Bundes an der Radialfläche des Ringes (4) übersteigt.

5. Rohrkupplung oder Abzweigleitung nach den Ansprüchen 1 bis 4, dadurch gekennzeichnet, daß der Durchmesser der Innenfläche des Vorsprungs am Klemmring (8) am freien Ende des Vorsprungs kleiner als der Durchmesser an der Basis des Vorsprunges ist.

6. Rohrkupplung oder Abzweigleitung nach den Ansprüchen 1 bis 5, dadurch gekennzeichnet, daß die mit dem Umfangsbund versehene Radialfläche des Ringes (4) so angeordnet ist, daß der Wandbereich (10) des Klemmringes (8) mit sich vergrößerndem Durchmesser beim Aufsetzen des Vorsprungs auf den Umfangsbund mit radialem Spiel in bezug auf die entsprechende Umfangswand der Kammer angeordnet ist.

**Revendications**

1. Raccord pour tuyau ou tuyau de branchement comportant une emboîture comprenant une chambre dont une portion a un diamètre qui s'accroît en s'éloignant de l'ouverture (13) de l'emboiture, une bague de serrage (8) dilatable radialement, prévue dans la chambre et présentant une portion de paroi corconférentielle extérieure ayant un diamètre qui s'accroît de manière analogue, une bague d'étanchéite (5) autour du tuyau, et une bague de centrage (4) ayant un prolongement (11) adapté à coopérer avec la bague de serrage et à permettre une expansion radiale de la bague de serrage, caractérisé en ce que la bague de serrage (8) comporte, au niveau de l'extrémité présentant le plus grand diamètre, une saille ayant une surface intérieure s'étendant sensiblement parallèle ment à la ligne médiane de la bague de serrage (8) ou s'effilant vers l'intérieur en direction de l'extrémité libre de la saillie, et en ce que le prolongement (11) de la bague de centrage (4) présente une surface extérieure s'étendant sensiblement parallèlement à la ligne médiane de la bague de centrage (4) ou s'effilant vers l'intérieur en direction d'une surface radiale de la bague de centrage (4), la saillie s'adaptant par sa surface intérieure à la surface extérieure du prolongement, et la distance radiale entre la surface intérieure de la saillie de la bague de serrage (8) à l'état non dilaté et sa ligne médiane étant inférieure à la distance radiale entre la surface extérieure du prolongement (11) de la bague de centrage (4) et sa ligne médiane, ce qui permet de placer la bague de serrage (8) pour que sa surface intérieure soit sur la surface extérieure du prolongement (11) de la bague de centrage (4) avec une certaine préhension de la bague de serrage.

2. Raccord pour tuyau ou tuyau de branchement selon la revendication 1, caractérisé en ce que le prolongement (11) de la bague de centrage (4) comprend une ou plusieurs saillies s'étendant depuis la surface radiale de la bague de centrage (4).

3. Raccord pour tuyau ou tuyau de branchement selon la revendication 1 et 2, caractérisé en ce que le prolongement (11) est constitué d'un collier circonférentiel.

4. Raccord pour tuyau ou tuyau de branchement selon les revendications 1—3, caractérisé en ce que le diamètre extérieur du collier circonférentiel est supérieur, à proximité de sa surface d'extrémité, au diamètre extérieur du collier au niveau de la surface radiale de la bague (4).

5. Raccord pour tuyau ou tuyau de branchement selon les revendications 1 à 4, caractérisé en ce que le diamètre de la surface intérieure de la saillie de la bague de serrage (8) au niveau de l'extrémité libre de la saillie est inférieur au diamètre au niveau de la base de la saillie.

6. Raccord pour tuyau ou tuyau de branchement selon les revendications 1 à 5, caractérisé en ce que la surface radiale de la bague (4) dotée du collier circonférentiel est située pour que la portion de paroi (10) de la bague de serrage (8) ayant un diamètre croissant soit située, lorsque la saillie s'adapte sur le collier circonférentiel, avec un jeu radial par rapport à la paroi circonférentielle correspondante de la chambre.

Fig.1

Fig.2